# NEW EUROPEAN PATENT SPECIFICATION

(11) **EP 3 616 983 B2**
(45) Date of publication and mention of the opposition decision: **13.09.2023**
(45) Mention of the grant of the patent: 19.05.2021
(21) Application number: 19182204.8
(22) Date of filing: 25.06.2019
(51) Int. Cl.: B60N 2/829, B60N 2/838, B60N 2/853, A47C 7/38

(54) **ADJUSTMENT DEVICE FOR A HEADREST**
ANPASSUNGSVORRICHTUNG FÜR EINE KOPFSTÜTZE
DISPOSITIF DE RÉGLAGE POUR APPUI-TÊTE

(30) Priority: 12.07.2018 DE 202018104018 U
(43) Date of publication of application: 04.03.2020
(73) Proprietor: CIAR S.P.A., 61100 Pesaro (IT)
(72) Inventor: CARRERA, Massimo, 61010 Tavullia (PU) (IT)
(74) Representative: Tetzner, Michael

(56) References cited:
- DE-A1- 4 009 127
- DE-A1- 19 800 040
- DE-A1-102017 116 148
- DE-C1- 19 954 385
- DE-U1-202016 100 824
- DE-U1-202018 100 399
- KR-B1- 101 600 199
- US-A- 5 052 754
- US-A1- 2008 252 128
- US-A1- 2016 250 953
- Translation of KR 101600199 B1

## Description

The invention relates to an adjustment device for a headrest such as those used in furniture for sitting or lying, particularly in a chair or sofa. Other exemplary applications such as automobile seats or the like, are also conceivable, however.

In general, both the height and inclination of a headrest can be adjusted in order to enhance the user's comfort. Comfort is further improved by a drive means for motorized adjustment of the headrest. Electrically adjustable headrests are known, for example, from DE 20 2018 100 399 U1, DE 20 2018 100 158 U1, or DE 199 83 415 B4. Nevertheless, the known solutions are often very expensive.

It is therefore the object of the invention to provide an adjustment device for a headrest that has a simple and compact construction.

According to the invention, this object is achieved by the features of claim 1.

The adjustment device according to the invention for a headrest has essentially the following features:
- a frame,
- a tilt adjustment device with which the inclination of the headrest can be adjusted, with the tilt adjustment device comprising at least one support element for securing the headrest,
- a height adjustment device comprising at least one tube, wherein the support element for securing the headrest is supported so as to be swivelable about a swivel axis at an end portion of the tube, and the tube is slidably guided in the frame, thus enabling the headrest to be height-adjustable relative to the frame, and
- one drive means that is connected to the height adjustment device and is operatively connected to the tube for the purpose of displacing same.

The tilt adjustment device further comprises a rod that is guided inside the tube and coupled at one of its ends with the support element, with a displacement of the rod relative to the tube causing the support element to swivel about the swivel axis, thereby effecting an adjustment of the inclination of the headrest.

Furthermore, the rod protrudes with a portion out of the tube at the end of the tube that faces away from the support element, with the drive means being secured to this portion by means of a fastening element. Moreover, a spring element is pushed up onto the portion and supported with one end on the tube and with another end on the fastening element, with an actuation of the drive means from a lower position of the headrest initially effecting a limited displacement of the tube and thus a displacement of the headrest into an upper position, and with a further actuation of the drive means effecting a displacement of the rod relative to the tube under compression of the spring element, so that the headrest is tilted.

By virtue of the construction according to the invention, only the at least one, preferably two tubes of the height adjustment device are visible between the frame, which is usually arranged at the upper end of a backrest, and the headrest, resulting in a very clear and pleasing outward design. As a result of the rod that is guided in the at least one tube for the purpose of positioning and inclining the headrest, no other moving parts of the adjustment device are visible, either.

Additional advantages and embodiments of the invention constitute the subject matter of the subclaims.

According to a preferred embodiment of the invention, the coupling of the support element (for fastening the headrest) with the rod is achieved by means of an articulated arm that is hingedly connected at one end to the rod and is hingedly connected at another end to the support element. Moreover, the drive means can be instantiated by a linear actuator that is coupled at one end with the frame and operatively connected at its other end to the at least one tube for the displacement thereof.

Furthermore, a connecting piece is expediently attached to the tube for the purpose of swivelably supporting the support element, with the connecting piece having a stop element for limiting the swiveling movement of the support element and thus limiting the inclining movement of the headrest.

The tube can have a stop that cooperates with at least one abutment that is provided on the frame in order to limit the translational movement of the tube. With this construction, both the height adjustment and the inclination adjustment of the headrest can be performed using a single drive means. However, it must then be accepted that the inclination of the headrest occurs only once the headrest has been fully raised, that is, up to the stop. Nevertheless, an optimized user setting can still be achieved by making the stop adjustable.

Additional embodiments and advantages of the invention will be explained in greater detail in the following description of two exemplary embodiments and the drawing:

In the drawing:
- Figs. 1a to 1c: show a three-dimensional representation of the headrest in three different positions,
- Fig. 2: shows a three-dimensional exploded view of the adjustment device according to a first exemplary embodiment,
- Fig. 3: shows a three-dimensional representation of the adjustment device according to Fig. 2 in the assembled state,
- Figs. 4a to 4c: show three-dimensional representations of the adjustment device according to the first exemplary embodiment with different positions of the headrest,
- Figs. 5a to 5c: show representations of the adjustment device in the different positions of the headrest and
- Fig. 6: shows a side view of a tilt adjustment device according to a second exemplary embodiment.

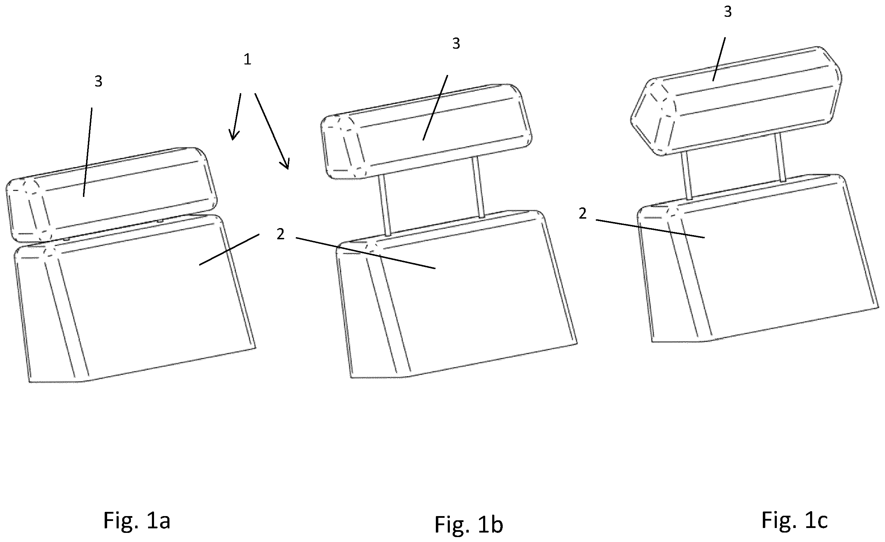

In Figs. 1a to 1c, a portion of a piece of furniture 1 for sitting or lying is shown with a backrest 2 and a headrest 3, with the headrest 3 being in the retracted state in Fig. 1a, in the raised state in Fig. 1b, and in the raised and inclined state in Fig. 1c.

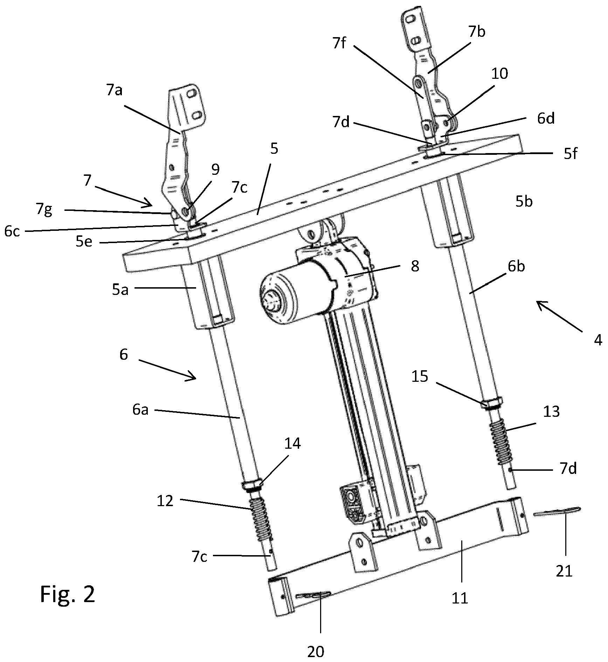

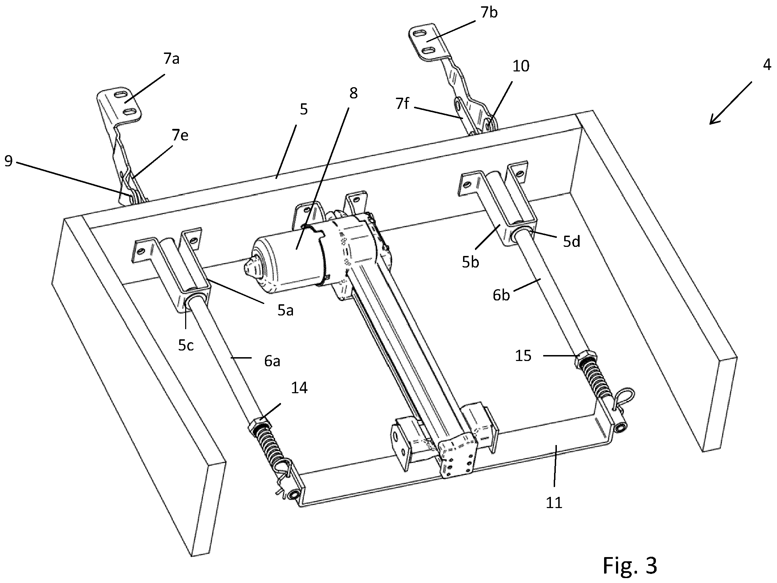

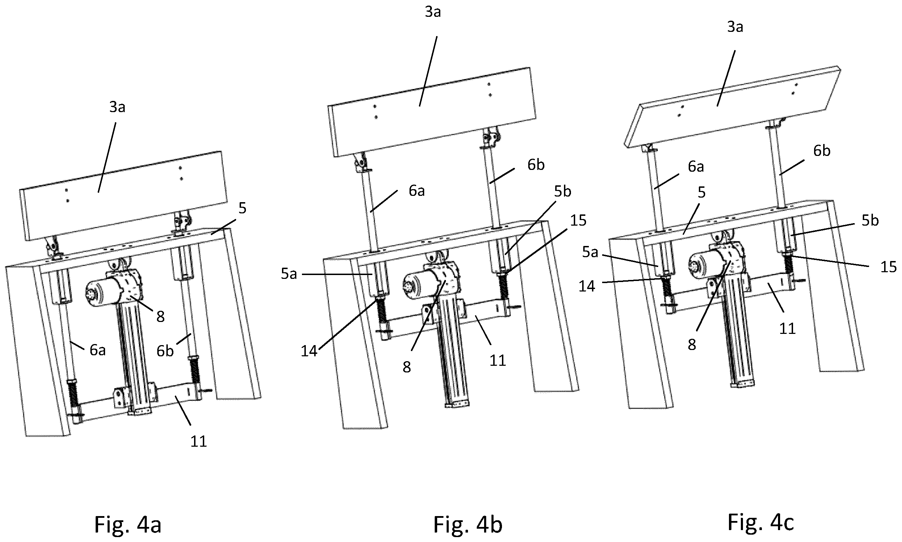

In order to achieve the different positions of the headrest 3, an adjustment device 4 shown in Fig. 2 is provided that comprises a frame 5, a height adjustment device 6, a tilt adjustment device 7, and a drive means 8. The height adjustment device has two tubes 6a, 6b that are supported on the frame 5 so as to be displaceable on the frame between a lower position (Fig. 4a) and an upper position (Fig. 4b). For this purpose, two spaced-apart guide profiles 5a, 5b are provided on the frame 5, each having a borehole 5c or 5d (Fig. 3) that is aligned with spaced-apart boreholes 5e, 5f (Fig. 2) in the frame and act as guides for the rods 6a and 6b.

A respective support element 7a, 7b of the tilt adjustment device 7 is hinged on the upper end of the two tubes 6a, 6b so as to be swivelable about a swivel axis 9, 10. The two support elements 7a, 7b are connected to one another by means of a connecting plate 3a (Figs. 4a to 4c). The connecting element 3a forms the headrest 3 together with a padding (not shown in greater detail).

The tilt adjustment device has a first rod 7c and a second rod 7d, each of which is displaceably guided in the first and second tube 6a, 6b, respectively. The two rods 7c, 7d have an upper end that protrudes from the two tubes 6a, 6b at the upper end thereof and is hingedly connected there via an articulated arm 7e, 7f to the associated support element 7a, 7b, respectively. The lower ends of the two rods 7c, 7d also protrude downward out of the two tubes 6a, 6b, respectively, with the two ends of the rods 7c, 7d being interconnected via a first fastening element 11. The drive means 8 is embodied as a linear actuator and secured between the two rods 6a, 6b with one end on the frame 5. The opposite end of the drive means 8 is connected to the first fastening element 11. A respective spring element 12, 13 is pushed onto the downwardly projecting portions of the rods 7c, 7d. During assembly, the fastening element 11 is then pushed onto the two portions of the two rods 7c, 7d and secured by brackets 20, 21. The spring elements 12, 13 are thus supported at one end on the two tubes 6a, 6b and at the other end on the fastening element 11 (Fig. 3).

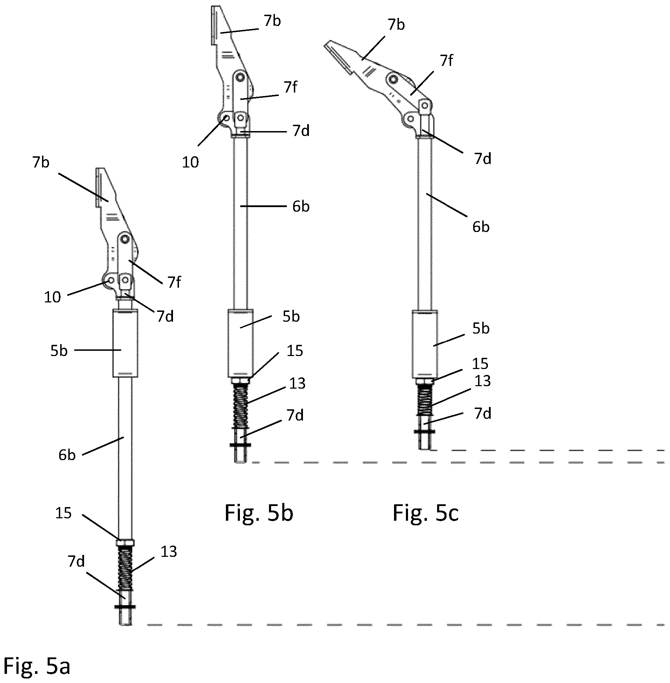

Actuation of the drive means 8 from the lower position of the headrest 3 shown in Fig. 4a initially causes limited displacement of the two tubes 6a, 6b and thus a displacement of the headrest 3 into the upper position shown in Fig. 4b. To limit the translational movement of the two tubes 6a, 6b, stops 14, 15 are provided at the lower ends of the tubes that are instantiated here by nuts that are screwed onto the ends of the tubes 6a, 6b. In the upper position according to Fig. 4b, these stops 14, 15 come into contact with the abutments of the frame 5 instantiated by the guide profiles 5a, 5b and thereby limit further displacement of the two rods 6a, 6b (Figs 4a and 4b; Figs. 5a and 5b).

Further actuation of the drive means 8 in the same direction now causes a displacement of the two rods 7c, 7d relative to the two tubes 6a, 6b, with the spring elements 12, 13 being compressed. At the same time, the two rods 7c, 7d slide out of the two tubes 6a, 6b at the upper end thereof and effect a tilting of the two support elements 7a, 7b via the two articulated arms 7e, 7f about the swivel axes 9, 10 (Fig. 4c; Fig. 5c).

An opposite actuation of the drive means 8 initially results in a shifting of the inclination of the headrest from the position shown in Fig. 4c into the position shown in Fig. 4b. Further actuation of the drive means would move the headrest into the lower position shown in Fig. 4a. In order to limit the swiveling movement of the support elements 7a, 7b into the position shown in Fig. 4b, each support element 7a and 7b cooperates with a stop element 7g that is respectively provided on a connecting element 6c and 6d, which are securely connected to the upper ends of the tubes 6a, 6b and with which the two support elements 7a, 7b are hingedly coupled about the swivel axes 9, 10.

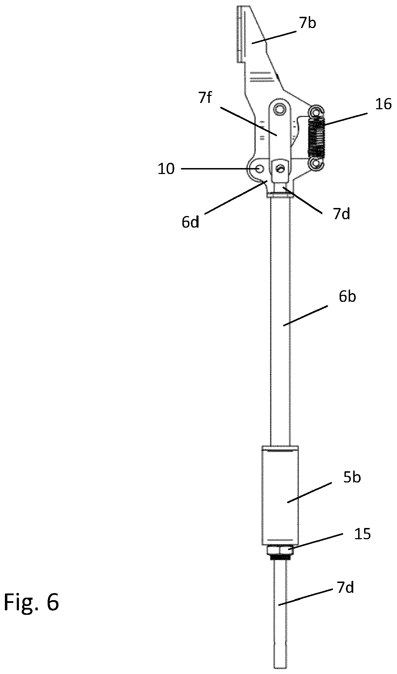

Fig. 6 shows yet another alternative exemplary embodiment of the tilt adjustment device in which the function of the spring elements 12 and 13 is realized by spring elements 16 that are not arranged on the portions of the rods 7c, 7d that project out at the lower end of the tubes 6a, 6b, but rather between the connecting elements 6c and 6d and the support elements 7a and 7b, respectively. Here, too, the spring elements 16 initially cause a displacement of the tubes 6a and 6b until the stops 14 and 15 come into contact with the guide profiles 5a and 5b. Further displacement of the rod 7c and 7d upward would then cause an inclination of the support member 7c or 7b against the force of the spring element 16.

In the adjustment device that is described above according to a first exemplary embodiment, only one drive means 8 is used with which both the height and the inclination of the headrest 3 can be adjusted. For this purpose, the headrest 3 must first be fully extended until the tilting of the headrest 3 can occur. The height of the headrest can be optionally adjusted by means of stops 14, 15 that can be displaced along the tubes 6a, 6b. In the depicted exemplary embodiment, the stops 14, 15 are instantiated by nuts 14 that can be screwed onto an external thread of the tubes 6a, 6b and, optionally, adjusted.

## Claims

1. An adjustment device (4) for a headrest (3), comprising
- a frame (5),
- a tilt adjustment device (7) with which the inclination of the headrest (3) can be adjusted, with the tilt adjustment device (7) comprising at least one support element (7a, 7b) for securing the headrest (3),
- a height adjustment device (6) comprising at least one tube (6a, 6b), wherein the support element (7a, 7b) for securing the headrest (3) is supported so as to be swivelable about a swivel axis (9, 10) at an end portion of the tube (6a, 6b), and the tubes (6a, 6b) is slidably guided in the frame (5), thus enabling the headrest (3) to be height-adjustable relative to the frame (5), and
- one drive means (8) that is connected to the height adjustment device (6) and is operatively connected to the tube (6a, 6b) for the purpose of displacing same,
wherein the tilt adjustment device (7) comprises a rod (7c, 7d) that is guided inside the tube (6a, 6b) and coupled at one of its ends with the support element (7a, 7b), with a displacement of the rod (7c, 7d) relative to the tube (6a, 6b) causing the support element (7a, 7b) to swivel about the swivel axis (9, 10), thereby effecting an adjustment of the inclination of the headrest (3),
wherein the rod (7c, 7d) protrudes with a portion out of the tube (6a, 6b) at the end of the tube (6a, 6b) that faces away from the support element (7a, 7b),
**characterized in that**
the drive means (8) is fastened to this portion by means of a fastening element (11; 19) and
a spring element (12, 13) is pushed up onto the portion and is supported with one end on the tube (6a, 6b) and with another end on the fastening element (11; 19), with an actuation of the drive means (8) from a lower position of the headrest (3) initially effecting a limited displacement of the at least one tube (6a, 6b) and thus a displacement of the headrest (3) into an upper position, and with a further actuation of the drive means (8; 18) effecting a displacement of the rod (7c, 7d) relative to the tube (6a, 6b) under compression of the spring element (12, 13), so that the headrest (3) is tilted.

2. The adjustment device as set forth in claim 1, **characterized in that** the coupling of the support element (7a, 7b) with the rod (7c, 7d) is achieved by means of an articulated arm (7e, 7f) that is hingedly connected at one end to the rod (7c, 7d) and is hingedly connected at another end to the support element (7a, 7b).

3. The adjustment device as set forth in claim 1, **characterized in that** the drive means (8) is instantiated by a linear actuator that is coupled at one end with the frame (5) and is operatively connected to the tube (6a, 6b) at its other end.

4. The adjustment device as set forth in claim 1, **characterized in that,** for the purpose of swivelably supporting the support element (7a, 7b) on the tube (6a, 6b), a connecting element (6c, 6d) is attached that has a stop element (7g) for limiting the swiveling movement of the support element (7a, 7b).

5. The adjustment device as set forth in claim 1, **characterized in that** the tube (6a, 6b) has a stop (14, 15) that cooperates with at least one abutment that is provided on the frame (5) in order to limit the translational movement of the tube (6a, 6b).

6. The adjustment device as set forth in any one of the preceding claims, **characterized in that** the height adjustment device (6) comprises two tubes (6a, 6b) that are mounted parallel to one another and are slidably supported in the frame, with two rods (7c, 7d) also being provided accordingly and each of the two tubes (6a, 6b) being guided in one of the two rods (7c, 7d).

## Patentansprüche

1. Verstellvorrichtung (4) für eine Kopfstütze (3) mit
- einem Rahmen (5),
- einer Neigungs-Verstelleinrichtung (7), mit der die Neigung der Kopfstütze (3) einstellbar ist, wobei die Neigungs-Verstelleinrichtung (7) wenigstens ein Trägerelement (7a, 7b) zur Befestigung der Kopfstütze (3) umfasst,
- einer Höhen-Verstelleinrichtung (6), die wenigstens ein Rohr (6a, 6b) umfasst, wobei das Trägerelement (7a, 7b) zur Befestigung der Kopfstütze (3) um eine Schwenkachse (9, 10) schwenkbar an einem Endbereich des Rohrs (6a, 6b) gehaltert ist und das Rohr (6a, 6b) in dem Rahmen (5) verschiebbar geführt ist, sodass die Kopfstütze (3) in ihrer Höhe relativ zum Rahmen (5) verstellbar ist, und
- wenigstens einer mit der Höhen-Verstelleinrichtung (6) in Verbindung stehenden Antriebseinrichtung (8; 17, 18), die zur Verschiebung des Rohrs (6a, 6b) mit diesem in Wirkverbindung steht,
wobei die Neigungs-Verstelleinrichtung (7) eine im Inneren des Rohres (6a, 6b) geführte Stange (7c, 7d) umfasst, die an ihrem einen Ende mit dem Trägerelement (7a, 7b) gekoppelt ist, wobei eine Verschiebung der Stange (7c, 7d) relativ zum Rohr (6a, 6b) eine Schwenkung des Trägerelements (7a, 7b) um die Schwenkachse (9, 10) und damit eine Verstellung der Neigung der Kopfstütze (3) bewirkt,
wobei die Stange (7c, 7d) an dem vom Trägerelement (7a, 7b) abgewandten Ende des Rohrs (6a, 6b) mit einem Teilstück aus dem Rohr (6a, 6b) hinausragt
**dadurch gekennzeichnet,**
**dass** die Antriebseinrichtung (8; 17, 18) mittels einem Befestigungselement (11; 19) an diesem Teilstück befestigt ist und
**dass** auf dem Teilstück ein Federelement (12, 13) aufgeschoben ist, das sich mit einem Ende am Rohr (6a, 6b) und mit einem anderen Ende an dem Befestigungselement (11; 19) abstützt, wobei eine Betätigung der Antriebseinrichtung (8) von einer unteren Stellung der Kopfstütze (3) zunächst eine begrenzte Verschiebung des wenigstens einen Rohrs (6a, 6b) und damit eine Verschiebung der Kopfstütze (3) in eine obere Stellung bewirkt und eine weitere Betätigung der Antriebseinrichtung (8; 18) eine Verschiebung der Stange (7c, 7d) relativ zum Rohr (6a, 6b) unter Kompression des Federelements (12, 13) bewirkt, wobei sich die Kopfstütze (3) neigt.

2. Verstellvorrichtung nach Anspruch 1, **dadurch gekennzeichnet, dass** die Kopplung des Trägerelements (7a, 7b) mit der Stange (7c, 7d) über ein Gelenkarm (7e, 7f) erfolgt, der mit einem Ende gelenkig mit der Stange (7c, 7d) und mit einem anderen Ende gelenkig mit dem Trägerelement (7a, 7b) verbunden ist.

3. Verstellvorrichtung nach Anspruch 1, **dadurch gekennzeichnet, dass** die Antriebseinrichtung (8) durch einen Linearaktuator gebildet ist, der mit einem Ende am Rahmen (5) angekoppelt ist und mit dem anderen Ende mit dem Rohr (6a, 6b) in Wirkverbindung steht.

4. Verstellvorrichtung nach Anspruch 1, **dadurch gekennzeichnet, dass** zur schwenkbaren Halterung des Trägerelements (7a, 7b) am Rohr 6a, 6b) ein Verbindungselement (6c, 6d) befestigt ist, welches ein Stoppelement (7g) zur Begrenzung der Schwenkbewegung des Trägerelements (7a, 7b) aufweist.

5. Verstellvorrichtung nach Anspruch 1, **dadurch gekennzeichnet, dass** das Rohr (6a, 6b) einen Anschlag (14, 15) aufweist, der zur Begrenzung der Verschiebebewegung des Rohres (6a, 6b) mit wenigstens einem am Rahmen (5) vorgesehenen Widerlager zusammenwirkt.

6. Verstellvorrichtung nach einem oder mehreren der vorhergehenden Ansprüche, **dadurch gekennzeichnet, dass** die Höhen-Verstelleinrichtung (6) zwei Rohre (6a, 6b) umfasst, die parallel zueinander und verschiebbar im Rahmen gehaltert sind und entsprechend auch zwei Stangen (7c, 7d) vorgesehen sind, wobei in jedem der beiden Rohre (6a, 6b) eine der beiden Stangen (7c, 7d) geführt ist.

## Revendications

1. Dispositif de réglage (4) pour un appui-tête (3), ledit dispositif de réglage comprenant :
- un cadre (5),
- un dispositif de réglage d'inclinaison (7) avec lequel peut être réglée l'inclinaison de l'appui-tête (3), le dispositif de réglage d'inclinaison (7) comprenant au moins un élément de support (7a, 7b) pour fixer l'appui-tête (3),
- un dispositif de réglage en hauteur (6) comprenant au moins un tube (6a, 6b), où l'élément de support (7a, 7b) pour fixer l'appui-tête (3) est supporté de façon à pouvoir pivoter autour d'un axe de pivotement (9, 10) au niveau d'une partie d'extrémité du tube (6a, 6b), et les tubes (6a, 6b) sont guidés de façon à coulisser dans le cadre (5), permettant ainsi à l'appui-tête (3) d'être réglable en hauteur par rapport au cadre (5), et
- au moins un moyen d'entraînement (8 ; 17, 18) qui est relié au dispositif de réglage en hauteur (6) et est fonctionnellement relié au tube (6a, 6b) dans le but de déplacer ce même tube,
le dispositif de réglage d'inclinaison (7) comprenant une tige (7c, 7d) qui est guidée à l'intérieur du tube (6a, 6b) et couplée, au niveau de l'une de ses extrémités, à l'élément de support (7a, 7b), un déplacement de la tige (7c, 7d) par rapport au tube (6a, 6b) ayant pour effet que l'élément de support (7a, 7b) pivote autour de l'axe de pivotement (9, 10), effectuant ainsi un réglage de l'inclinaison de l'appui-tête (3) ,
la tige (7c, 7d) faisant saillie avec une partie hors du tube (6a, 6b) au niveau de l'extrémité du tube (6a, 6b), ladite partie étant placée à l'opposé de l'élément de support (7a, 7b),
**caractérisé en ce que**
le moyen d'entraînement (8 ; 17, 18) étant fixé sur cette partie au moyen d'un élément de fixation (11 ; 19) et
**en ce qu'**un élément formant ressort (12, 13) est poussé vers le haut sur ladite partie et est supporté en ayant une extrémité sur le tube (6a, 6b) et en ayant une autre extrémité sur l'élément de fixation (11 ; 19), un actionnement du moyen d'entraînement (8), à partir d'une position basse de l'appui-tête (3), effectuant initialement un déplacement limité de l'au moins un tube (6a, 6b) et, par conséquent, effectuant un déplacement de l'appui-tête (3) dans une position haute, et un autre actionnement du moyen d'entraînement (8 ; 18) effectue un déplacement de la tige (7c, 7d) par rapport au tube (6a, 6b) sous l'effet d'une compression de l'élément formant ressort (12, 13), de sorte que l'appui-tête (3) est incliné.

2. Dispositif de réglage selon la revendication 1, **caractérisé en ce que** le couplage de l'élément de support (7a, 7b) à la tige (7c, 7d) est réalisé au moyen d'un bras articulé (7e, 7f) qui, au niveau d'une extrémité, est relié de manière articulée à la tige (7c, 7d) et, au niveau d'une autre extrémité, est relié de manière articulée à l'élément de support (7a, 7b).

3. Dispositif de réglage selon la revendication 1, **caractérisé en ce que** le moyen d'entraînement (8) est déclenché par un actionneur linéaire qui, au niveau d'une extrémité, est couplé au cadre (5) et, au niveau de son autre extrémité, est fonctionnellement relié au tube (6a, 6b).

4. Dispositif de réglage selon la revendication 1, **caractérisé en ce qu'**un élément de liaison (6c, 6d) est fixé dans le but de supporter l'élément de support (7a, 7b) sur le tube (6a, 6b), de façon pivotante, ledit élément de liaison ayant un élément de butée (7g) pour limiter le mouvement pivotant de l'élément de support (7a, 7b).

5. Dispositif de réglage selon la revendication 1, **caractérisé en ce que** le tube (6a, 6b) a une butée (14, 15) qui coopère avec au moins un point d'appui qui est prévu sur le cadre (5), afin de limiter le mouvement de translation du tube (6a, 6b).

6. Dispositif de réglage selon l'une quelconque des revendications précédentes, **caractérisé en ce que** le dispositif de réglage en hauteur (6) comprend deux tubes (6a, 6b) qui sont montés parallèlement l'un à l'autre et sont supportés en coulissant dans le cadre, les deux tiges (7c, 7d) étant aussi prévues en conséquence, et chacun des deux tubes (6a, 6b) est guidé dans l'une des deux tiges (7c, 7d).
